# EUROPEAN PATENT APPLICATION

(11) **EP 2 322 818 A1**
(43) Date of publication of application: **18.05.2011**
(21) Application number: 10186281.1
(22) Date of filing: 01.10.2010
(51) Int. Cl.: F16D 69/02, C04B 35/83

(54) **Increased area weight segments with pitch densification to produce lower cost and higher density aircraft friction materials**

(30) Priority: 12.11.2009 US 617418
(71) Applicant: Honeywell International Inc., Morristown, NJ 07962 (US)
(72) Inventor: La Forest, Mark L., Morristown, NJ 07962-2245 (US); James, Mark Criss, Morristown, NJ 07962-2245 (US); Murdie, Neil, Morristown, NJ 07962-2245 (US)
(74) Representative: Buckley, Guy Julian

(57) **Abstract**

Economically attractive method of making carbon-carbon composite brake disc or pad. The manufacturing method herein provides lowered manufacturing cycle time and reduced cost of manufacturing while enabling increased density of the final composite. The method includes: providing a fibrous nonwoven fabric segment produced from high basis weight fabric; optionally needling sequential layers of the fabric segments together to construct a brake disc or pad preform; carbonizing the fibrous preform to obtain a carbon-carbon preform; and infiltrating the resulting carbonized needled fibrous fabric preform via pitch or pitch and CVD/CVI processing in order to produce a carbon-carbon composite brake disc or pad which has a final density of 1.60 to 1.90 grams per cubic centimeter.

## Description

### FIELD OF THE INVENTION

The present invention relates to carbon-carbon composite materials which are useful as friction materials, particularly, brake discs and pads. The carbon fiber preforms used to produce the carbon-carbon composites are made by needling together woven or nonwoven fabric made from carbon fiber precursors such as polyacrylonitrile fibers or pitch fibers. In accordance with the present invention, the carbon fiber preforms are then densified with pitch or a combination of pitch and CVD/CVI in order to increase their density in an economical manner. CVD/CVI may be used at any step in the densification process when used in combination with pitch infiltration.

### BACKGROUND OF THE INVENTION

At the present time, the brake discs of military and commercial aircraft are usually made from carbon-carbon composites. Traditionally, C-C composites used as friction materials are produced by combining carbon fibers with a carbon matrix material which is deposited around the fibers using a Chemical Vapor Infiltration (CVI) process or a Chemical Vapor Deposition (CVD) process to provide the composites with the requisite density. CVI/CVD processing is an expensive, capital intensive, and time-consuming process, frequently taking several months to complete. Therefore, there is a need for improvements to both the preforming and densification methods in the manufacture of C-C composite friction materials. Such desirable improvements ideally would include reductions in capital investment, in cycle time, and in cost. Additional desirable improvements would include improvements to the mechanical and thermal properties of the composites, and better friction and wear performance of the friction materials (e.g., aircraft brake discs) made from the composites.

Background prior art with respect to nonwoven preform aspects of the present invention includes the following patent publications: EP 1 724 245 A1 describes a process for producing carbon-carbon composite preform, by: providing short carbon fiber or fiber precursor segments; providing particulate pitch; combining the fiber segments and pitch particles in a mold; subjecting the resulting mixture to elevated pressure to create an uncarbonized preform; placing the preform in a constraint fixture; and carbonizing the combined components in the constraint fixture at an elevated temperature to provide a preform having a desired density. US 2008/0090064 A1 discloses a carbon-carbon composite material comprising carbonized woven or nonwoven fabric-based preforms. A method taught in this document contemplates densifying the preform and subsequently adding a ceramic additive thereto in order to enhance the properties of the final product. US 2008/0041674 A1 discloses annular drive inserts which are placed within an annular opening within a brake disk. The annular drive inserts may comprise carbon-carbon composite which has been treated with antioxidant. US 7,374,709 B2 describes a method in which specific end-use application friction requirements are satisfied by tailoring a level of carbon in a selected carbon/carbon preform, heat treating the carbon/carbon composite preform to affect thermal conductivity so as to optimize overall braking performance prior to ceramic processing, and by selecting an optimum level of ceramic hard phase to achieve satisfactory friction disc wear life and friction characteristics of a resulting braking material. Additional background patents and publications include: US 7,252,499 B2; US 7,172,408 B2; US 7,025,913 B2; and US 6,939,490 B2.

Background prior art with respect to the densification aspects of the present invention includes the following: US 2006/0279012 A1 discloses a carbon fiber preform densification by pitch infiltration wherein the pitch infiltration step may be facilitated by the application of vacuum and/or pressure. US 4,318,955 discloses a method of making a carbon brake product wherein fibers are packed and then twice saturated with pyrocarbon, with a machining step therebetween, and heat treatment at 2000°C, to a final density of 1.75-1.8 g/cm. US 6,077,464 discloses a method of making carbon-carbon composite materials which includes a variety of densification methods which may be used singularly or in various combinations. See e.g. column 4, lines 40-45. US 6,342,171 B1 discloses a process of stabilizing a pitch-based carbon foam which includes densification of the foam with four cycles of combined VPI and PIC. See e.g. column 12, lines 8-40. US 2004/0105969 A1 discloses manufacture of carbon composites which includes densification of the preform by resin or pitch via vacuum and pressure.

### SUMMARY OF THE INVENTION

The present invention improves on conventional processes for manufacturing carbon-carbon composites by employing nonwoven fabric segments that are significantly heavier than corresponding nonwoven fabric segments used in conventional processing. This improvement can also be performed in conjunction with increasing the needling rate used to manufacture the preform and by utilizing pitch densification or pitch densification with CVD/CVI thereby reducing cost and cycles time. Pitch densification combined with the heavier area weight segment preforms also reduces the number of cycles of densification to reach the target density (typically in the range 1.6 - 1.90g/cc).

The carbon-carbon composite materials provided by the present invention are useful as friction materials, such as brake discs and pads. Carbon-carbon composites in accordance with the present invention are normally made by needling together fabric (woven or nonwoven) made from carbon-containing fibers such as PAN or pitch, followed by a carbonization / heat-treatment step. The carbon fiber preforms can be needled either in the carbonized or non-carbonized state. The non-carbonized fiber preforms would have to go through a carbonization/heat-treat step following the needling process. It should be noted that final preform thickness and fiber volume is also controlled at carbonization, for instance by varying the level of pressure applied to the preforms during carbonization. That is, the preforms may be unconstrained during carbonization (i.e., no pressure is applied to them), or the preforms may be constrained during carbonization, typically by means of applying pressure (e.g., weights placed on top of the preforms). The carbonized fiber preforms are then densified by pitch infiltration, or by pitch and CVD/CVI, to final density of 1.6 - 1.9 g/cc. The resulting carbon-carbon composite is suitable for use as, e.g., a brake disc or pad in aircraft and automotive brake systems.

The carbon fiber preform manufacturing method described in this invention benefits from lowered manufacturing cycle time, reduced cost of manufacturing, and at the same time increased density of the final composite.

The present invention provides a method of making a carbon-carbon composite brake disc or pad. The method of this invention provides a fibrous nonwoven fabric segment comprised of oxidized polyacrylonitrile fibers, wherein the segment is a produced from a fabric which has a high basis weight - in the range from 1250 grams per square meter to 3000 grams per square meter - as compared to conventional segments (1000 grams per square meter). The method makes use of a needling machine capable of needling layers of these high basis weight fibrous fabric segments to one another. First, two layers of the high basis weight fibrous fabric segments are needled to one another and then sequential layers of the high basis weight fibrous fabric segments are needled on top of the layers thereof which have previously been needled together. In this manner, the high basis weight fibrous fabric segment layers are combined into a brake disc or pad preform. The preceding step is continued until the preform composed of needled fabric segment layers reaches a thickness suitable for manufacturing a brake disc or pad from it. The fibrous preform is carbonized to obtain the final carbon fiber preform. Optionally, the fabric may be carbonized prior to needling instead of or in addition to being carbonized after needling. The carbonized needled fibrous fabric preform is infiltrated with pitch or pitch and CVD/CVI in order to produce a carbon - carbon composite brake disc or pad.

In the manufacturing method provided by the present invention, the carbon fiber preform composed of needled high basis weight fabric segment layers reaches a thickness suitable for manufacturing a brake disc or pad therefrom after a needling time which is 80% or less the needling time necessary to produce a preform having the same thickness from an otherwise similar fibrous nonwoven fabric segment having a conventional basis weight of 1000 grams per square meter subjected to identical processing conditions. It is understood herein that "an otherwise similar fibrous nonwoven fabric segment" indicates that the present invention employs - for the production of a brake disc or pad having given dimensions - segments with the same length and width as conventional, previously known manufacturing techniques. The fabric segments in the present invention, however, are thicker and therefore heavier than the segments conventionally employed to make carbon-carbon composite brake discs or pads. Further information relating to fabric segments as used in the manufacture of brake discs and pads can be found in US 6,691,393 B2 (Mark C. James, Terence B. Walker, and Neil Murdie), incorporated herein by reference, and in various patents cited therein.

Manufacturing brake discs or pads in accordance with this invention includes die-cutting the carbonized preform to near net shape prior to the pitch or pitch with CVD/CVI densification step. Typically, a brake disc or brake pad preform will be 1 to 4 inches in thickness, and the resulting final product brake disc or brake pad preform manufactured therefrom will be, respectively, 0.5 to 1.75 inches in thickness. The dimension of the preform is normally reduced by conventional machining steps such as grinding or ID/OD lathe turning which are conducted in order to facilitate densification of the preform.

The density of the carbon-carbon composite brake disc or pad produced by the above-described method is at least 1.60 grams per cubic centimeter, and can be manufactured to any density target between 1.6 and 1.9 g/cc.

Processing in accordance with the present invention can also be performed in conjunction with increasing the RPM of the needler bowl by a factor of at least 25% above conventional manufacturing RPM of 2 RPM and the needler is run at a stroke speed of at least 875 strokes per minute to combine the high basis weight fibrous fabric layers into a fibrous preform. The needler may be an annular needler in which the first layer of high basis weight fibrous fabric is placed on a pliable material, such as a foam ring, that allows the needles to penetrate without damaging the needles. Subsequent layers of fabric would then be placed one on top of the other over the foam ring of the needler.

### DETAILED DESCRIPTION OF THE INVENTION

High performance carbon brakes for aerospace and automotive applications are typically provided by needle punching oxidized PAN fibers into a preform using specialized equipment called needlers. The preform is needled to a desired needle-punch density which is controlled by the needle stroke rate, the needle pattern density, and in some cases by rotational speed of the needler bowl. In accordance with the present invention, the needlers are run at a faster rate for shorter time periods, and the fiber volume fraction of the final C-C composite may be reduced, as compared to in the manufacture of conventional aircraft and automotive friction materials. In conjunction with high basis weight segments, this invention thus results in shortened overall cycle time and reduced material and labor costs.

In general, for aircraft brake disc applications the needlers are designed to handle either annular or non-annular preform geometries. Typically, for annular preforms the key parameters which affect cycle time and cost are needler stroke speed, bowl rotational speed, and needle pattern density as well as fiber costs. For non-annular preforms, the key process parameters affecting cycle time and cost are needler stroke rate and needle pattern density as well as fiber costs.

In the case of annular preforms, the key process parameters affecting cycle time are needle stroke rate (typically 700 strokes / min) and the rotational bowl speed (typically speed is 2 rpm). Increasing the bowl rotation rate by 50% (3 rpm) while keeping the number of needling strokes per minute at 350:1 allows the cycle time which is necessary to produce the preform to be reduced by about 33%. Another cost advantage from the faster cycle time is the reduction in capital investment necessary to produce a given quantity of preforms.

Increasing the areal weight of carbon fiber segments used in the final composite leads to reduced materials costs and cycle times. The increase areal weight fabric segments permit faster needling to achieve the targeted preform weight when compared to standard segments. Moreover, for a given final density, the number of cycles of densification required can be reduced, because more open (less densely packed) fabric layers may be employed when each segment has a higher areal weight. This is because fewer, higher areal weight fabric segments require less needling to make a fibrous preform. This innovation results in a more open fabric which has wider, deeper pores, which are easier to infiltrate by pitch or pitch in combination of CVD/CVI processing. Therefore, fewer densification cycles are required to meet final density requirements, thereby providing additional capital avoidance for CVD/CVI investment.

The target volume fraction of the carbon fiber preform and final composite (brake disc or pad) produced in accordance with the present invention is typically defined in the range 17% to 30%. The fiber volume fraction is controlled by: 1) the amount of fiber used in the initial fiber preform; and 2) the level of compression during carbonization.

The target final density of the composite (brake disc or pad) is typically defined in the range 1.6 to 1.9 grams per cubic centimeter. The final density of the composite is controlled by: 1) the type and amount of pitch and CVI/CVD densification processing; 2) the number of densification cycles (% porosity); 3) the fiber volume fraction; 4) the type of fiber; and 5) heat treatment temperature.

This invention provides a method of making a carbon-carbon composite brake disc or brake pad which comprises the sequential steps of: (i) providing high basis weight segments of fabric comprised of fibers, such as polyacrylonitrile, pitch, rayon, etc. fibers, which fibers may be pre- or post-carbonized; (ii) providing a needler capable of needling layers of the fibrous fabric segments to one another; (iii) needling a plurality of layers of said fibrous fabric segments to one another, thereby combining the fibrous fabric segment layers into a brake disc or pad preform, wherein said needlers can be: annular rotating needlers, annular non-rotating needlers, or non annular needlers; (iv) carbonizing said fibrous preform, with or without constraint, at 1200-2540°C to provide a carbon fiber brake disc or brake pad preform having a fiber volume fraction in the range 17% to 30% in the brake disc or brake pad preform (and in a finished product brake disc and brake pad made from said preform); (v) densifying the resulting carbonized needled fibrous fabric preform with pitch (isotropic or anisotropic) or with pitch and CVD/CVI, to substitute higher density carbon from the pitch pads having a lower fiber volume fraction, wherein the carbon fiber preform is densified by pitch, e.g., vacuum pressure infiltration (VPI) or resin transfer molding (RTM) processing; (vi) carbonizing the resulting pitch-infiltrated carbon fiber disk at 600 - 1200°C to carbonize the pitch therein; (vii) heat-treating the resulting pitch-densified carbon brake disc or brake pad at 1200 - 2540°C; (viii) subjecting said carbon brake disc or brake pad to a final cycle of CVD/CVI processing in order to produce a carbon-carbon composite brake disc or pad which has a density of at least 1.75 g/cc and which has a uniform through-thickness density; and (ix) optionally subjecting said carbon brake disc or brake pad to a final heat treat at 1200 - 2540°C.

By practicing the foregoing method of manufacturing composite brake discs and pads, cost reductions are gained, with respect to otherwise similar manufacturing methods in which the brake disc or brake pad preform has a conventional fiber volume fraction and in which no pitch densification step is employed, from: faster preforming rates; less fiber used in the preform; reduced number of densification steps to meet the final targeted density; reduced capital investment in high cost CVD/CVI furnaces; and reduced manufacturing cycle times.

The foregoing method may include an optional oxidative stabilization step prior to carbonization to prevent exudation from the preform during carbonization. The foregoing method may include an optional machining step after carbonization to open porosity at the surface(s) of the carbon disc prior to further densification (via pitch, CVI/CVD, etc.).

In one embodiment, this invention provides a method of making a carbon-carbon composite brake disc or pad which comprises the following sequential steps. A high basis weight fibrous fabric comprised of carbon precursor fibers selected from the group consisting of oxidized polyacrylonitrile fibers, pitch fibers, and rayon fibers is provided. A needler capable of needling layers of said fibrous fabric to one another is provided. A target density and thickness and a target fiber volume fraction for a brake disc or pad preform to be produced, and for a final brake disc or pad density to be produced therefrom, are set. The target density of the brake disc or brake pad preform to be produced will typically be 0.35 g/cc or higher. For instance, a target preform density can be in the range of 0.35 to 0.55 g/cc. The target final density of the brake disc or brake pad (final product) to be produced will typically be 1.70 g/cc or higher. The target thickness of the brake disc or brake pad preform to be produced will be in the range 0.5 to 2.5 inches, and typically within the range 1.0 to 1.5 inches. The target fiber volume fraction of the brake disc or brake pad preform is typically in the range 17% to 30%, preferably in the range 17% to 24%, e.g., in the range 20% to 21%.

In this method, two layers of the high basis weight fibrous fabric segments are needled to one another and then needling sequential layers of the fibrous fabric are needled on top of the layers thereof which have previously been needled together, while running the needler at a needling rate of greater than 700 strokes per minute. In accordance with the present invention, the needler typically runs at a stroke speed of from 850 to 1250 strokes per minute to combine the fibrous fabric layers into a fibrous preform. When the needling procedure employed is annular needling, the RPM of the needler bowl may be increased by a factor of at least 50% above a conventional 2 RPM manufacturing speed. When using an annular needler, the first layer of fibrous fabric is typically placed on a pliable material, such as a foam ring, that allows the needles to penetrate without damaging the needles, and subsequent layers of fabric are placed one on top of the other over the foam ring of the needler. This needling step combines the fibrous fabric layers into a brake disc or pad preform. The foregoing steps are continued until the preform composed of needled fabric layers reaches the target density and thickness.

Once the needled fibrous preform has been prepared, the fibrous preform may be carbonized under constraint to obtain the target fiber volume fraction in the final carbon-carbon composite product. Alternatively, the carbonization of the fibrous fabric preform may be conducted with no constraint, thereby producing a carbon-carbon composite brake disc or pad with lower volume fraction in the final composite. Therefore, the final volume fraction and density of the end product is controlled by the level of compression during carbonization. They are typically from 17 to 30% and from 1.6 to 1.9 g/cc, respectively, depending on the desired final product density to be achieved. Subsequently, the resulting carbonized needled fibrous fabric preform may be densified via pitch or pitch and CVD/CVI processing in order to produce a carbon-carbon composite brake disc or pad which has a density of at least 1.70 grams per cubic centimeter. Often, the carbonized preform is die-cut to near net shape prior to densification.

Yet another related embodiment of this invention is a method of making a carbon-carbon composite brake disc or pad which comprises the steps of: optionally, pre-carbonizing a fibrous fabric made from oxidized polyacrylonitrile fiber fabric, pitch fiber fabric, or carbon fiber fabric; needling a first layer of pre-cut segments of said fibrous fabric on a foam base in a needler, e.g., and annular needler; layering subsequent layers of pre-cut segments of said fibrous fabric onto the first layer on the foam base in the needler (a foam ring when an annular needler is used); running the needler at a needling rate of greater than 700 strokes per minute while increasing the bowl rotation to greater than 2 revolutions per minute to combine the fibrous fabric layers into a fibrous preform (the RPM of the needler bowl is increased by a factor of 50% above conventional manufacturing RPM); continuing the foregoing steps until the needled fabric layers reach the desired thickness and weight; where said fibrous fiber fabric has not been pre-carbonized, carbonizing the resulting needled fibrous fabric preform; and infiltrating the resulting carbonized needled fibrous fabric preform via pitch or pitch and CVD/CVI processing in order to produce a carbon-carbon composite brake disc or pad which has a density of at least 1.60 grams per cubic centimeter. In this embodiment, pitch or pitch and CVD/CVI infiltration of the carbonized needled fibrous fabric preform may be conducted on a preform which is not constrained, in order to produce a higher density final carbon-carbon composite brake disc or pad. This can also be achieved in the present invention by replacing the lower density carbon fibers in the preform with higher density carbon, which carbon is deposited via pitch infiltration (and, if desired, CVI/CVD processing).

Optional Additional Cost Savings. Carbon fiber preforms can also be produced without the need for needling. Using this approach, further savings can be achieved by eliminating the needler and needling step. In the carbon fiber preform state, the preform layers are held by interfacial bonding of the fibers between layers (a "Velcro" effect), and are constrained and bonded during the first densification cycle by pitch infiltration or CVD/CVI. In this option, the remaining manufacturing steps would remain the same as described throughout the present application.

### Manufacturing parameters.

Typically, this invention employs oxidized PAN fibers to make the preforms and subsequently the carbon-carbon composite friction materials (e.g., brake discs and pads). The oxidized PAN fibers may be subjected to low temperature or high temperature heat treatments in accordance with techniques that are known in the art. The oxidized PAN fibers are generally used in the form of nonwoven oxidized PAN fabric segments. Conventional nonwoven fabrics employed for the production of brake discs and pads have a basis weight of about 1000 grams per square meter. In accordance with the present invention, one employs nonwoven fabrics having basis weights ranging from 1250 grams per square meter to 3000 grams per square meter, more preferably, a nonwoven fabric having a basis weight in the range 1350 to 2000 grams per square meter. The oxidized PAN fabrics may be subjected to low temperature or high temperature carbonization processing in accordance with techniques that are known in the art. The oxidized PAN fabrics may be joined together in the present invention by rotating annular needling, by non-rotating annular needling, or by non-annular needling. In each case, an optional constrained or unconstrained carbonization step may be employed. Likewise in each case, and optional die cutting step may be employed In each case, subsequent to the carbonization and/or die cutting step if used, a pitch densification or pitch and CVD/CVI densification step is employed. In each case, an optional heat treatment step may be employed after the final densification step. The resulting carbon-carbon composite is then subjected to a final machining step.

### General discussion.

Disclosure relevant to the needling technology which is improved upon in the present invention may be found in US 5,338,320 - PRODUCTION OF SHAPED FILAMENTARY STRUCTURES, in US 5,882,781 - SHAPED FIBROUS FABRIC STRUCTURE COMPRISING MULTIPLE LAYERS OF FIBROUS MATERIAL, and in US 6,691,393 B2 WEAR RESISTANCE IN CARBON FIBER FRICTION MATERIALS. The disclosure of each of US 5,338,320, US 5,882,781, and US 6,691,393 B2 is incorporated herein by reference.

A non-annular needler does not need a foam ring. Typically a base plate with holes that match the needle pattern is used, since there is no bowl and there is no rotation of the bowl. A foam ring (or similar pliable, soft material) is only required for an annular needler.

Following manufacture of the preform, it is the carbonization step that is used (constrained or unconstrained) to control the final volume fraction of the final composite (and final density). If a preform has the same amount of fiber as the baseline preform material, the final fiber volume fraction of the composite can be decreased and final density can be increased if non-constrained carbonization is used (but the composite would be thicker). If a preform has less fiber than the baseline preform material, the final volume fraction and density could be kept the same as the baseline if the carbonization is constrained (but a thinner preform would result). But if carbonization is left unconstrained, the final composite would have lower fiber volume fraction, and higher density (with same thickness (compared with baseline).

The fabrics - for instance, nonwoven PAN segments - are commercially available. In accordance with the present invention, they are needled as described herein, then carbonized (that is, converted to carbon fiber) at temperatures in the range 1000-2700°C. They are then die-cut to a nominal size (if required) for a given platform, and densified by CVD/CVI processing. Finally, they are subjected to a final heat treatment at a temperature typically in the range 1000-2540°C.

**Carbonization.** The carbonization process as it is applied to carbon-fiber precursor fibrous materials is in general well known to those skilled in the art. The fiber preforms are typically heated in a retort under inert or reducing conditions to remove the non-carbon constituents (hydrogen, nitrogen, oxygen, etc.) from the fibers. Carbonization can be carried out either in a furnace, a hot isostatic press, an autoclave, or in a uniaxial hot press. In each of these techniques, the fibrous fabric is heated to the range of 600° to about 1000°C while maintaining an inert atmosphere in the pressure range of 1 to 1000 atmospheres. In one approach, for instance, the retort may be purged gently with nitrogen for approximately 1 hour, then it is heated to 900°C in 10-20 hours, and thence to 1050°C in 1-2 hours. The retort is held at 1050°C for 3-6 hours, then allowed to cool overnight. Carbonization is typically carried out up to 1800°C.

**VPI**. Vacuum Pressure Infiltration ("VPI") is a well known method for impregnating a resin or pitch into a preform. The preform is heated under inert conditions to well above the melting point of the impregnating pitch. Then, the gas in the pores is removed by evacuating the preform. Finally, molten pitch is allowed to infiltrate the part, as the overall pressure is returned to one atmosphere or above. In the VPI process a volume of resin or pitch is melted in one vessel while the porous preforms are contained in a second vessel under vacuum. The molten resin or pitch is transferred from vessel one into the porous preforms contained in the second vessel using a combination of vacuum and pressure. The VPI process typically employs resin and pitches which possess low to medium viscosity. Such pitches provide lower carbon yields than do mesophase pitches. Accordingly, at least one additional cycle of pitch infiltration of low or medium char-yield pitch (with VPI or RTM processing) is usually required to achieve a final density of 1.7 g/cc or higher.

**RTM.** Resin Transfer Molding ("RTM") is an alternative to the use of VPI for the production of polymer-based composites. In Resin Transfer Molding, a fibrous preform or mat is placed into a mold matching the desired part geometry. Typically, a relatively low viscosity thermoset resin is injected at low temperature (50 to 150°C) using pressure or induced under vacuum, into the porous body contained within a mold. The resin is cured within the mold before being removed from the mold. US 6,537,470 B1 (Wood et al.) describes a more flexible RTM process that can make use of high viscosity resin or pitch. The disclosure of US 6,537,470 B1 is incorporated herein by reference.

**CVD/CVI.** Chemical vapor deposition (CVD) of carbon is also known as chemical vapor infiltration (CVI). In a CVD/CVI process, carbonized, and optionally heat treated, torr. When the parts reach a temperature of 900° to 1200°C., the inert gas is replaced with a carbon-bearing gas such as natural gas, methane, ethane, propane, butane, propylene, or acetylene, or combinations of these gases. When the hydrocarbon gas mixture flows around and through the fiber preform porous structures, a complex set of dehydrogenation, condensation, and polymerization reactions occur, thereby depositing the carbon atoms within the interior and onto the surface of the fiber preform porous structures. Over time, as more and more of the carbon atoms are deposited onto the carbon fiber surfaces, the fiber preform becomes more dense. This process is sometimes referred to as densification, because the open spaces in the fiber preform are eventually filled with a carbon matrix until generally solid carbon parts are formed. Depending upon the pressure, temperature, and gas composition, the crystallographic structure and order of the deposited carbon can be controlled, yielding anything from an isotropic carbon to a highly anisotropic, ordered carbon. US 2006/0046059 A1 (Arico et al.), the disclosure of which is incorporated herein by reference, provides an overview of CVD/CVI processing.

**Heat treatment.** Intermediate and/or final heat treatment of the preforms is usually applied to modify the crystal structure of the carbon. Heat treatment is employed to modify the mechanical, thermal, and chemical properties of the carbon in the preform. Heat treatment of the preforms is typically conducted in the range of 1400° to 2800°C. The effect of such a treatment on graphitizable materials is well known. Higher temperatures increase the degree of crystalline order in the carbon material, as measured by such analytical techniques as X-ray diffraction or Raman spectroscopy. Higher temperatures also increase the thermal conductivity of the carbon in the products, and the elastic modulus of the final C-C composite.

**Machining the surfaces of the preform.** Standard machining processes, well know to persons skilled in the art of manufacturing carbon-carbon composite brake discs, are used in the manufacture of the carbon-carbon composite friction discs provided by the present invention. Between densification processing steps, the surfaces of the annular discs are ground down to expose porosity in the surfaces. Once the final density is achieved, the annular discs are ground to their final thickness using standard grinding equipment to provide parallel flat surfaces, and then the inside diameter and outside diameter regions are machined, typically using a CNC (computer numerical control) Mill to provide the final brake disc geometry, including such features as rivet holes and drive lugs.

### Reduced usage of CVI/CVD

This invention utilizes low cost isotropic and/or mesophase pitch feedstocks to densify carbon fiber preforms by, for example, VPI and/or RTM equipment in place of or in combination with CVI/CVD processing, thereby providing reduced manufacturing cycle times and costs as well as reducing the need for expensive densification equipment. Brake discs manufactured in accordance with this invention have higher densities and better thermal characteristics, which result in improved mechanical properties and friction and wear performance as compared with comparable CVI/CVD-densified brake discs.

### EXAMPLES

The following non-limiting examples illustrate some specific embodiments of the present invention. Persons skilled in the art will readily conceive of many other possible manufacturing procedures which will take advantage of the benefits provided by the present disclosure. The choice of pitch and impregnation equipment depends on the friction and wear application and the level of friction and wear requirements.

### EXAMPLE 1

Pre-cut segments of high areal weight oxidized polyacrylonitrile (O-PAN) fiber nonwoven fabric are layered on a foam ring in a needler. The segments are pre-cut based upon the size of the brake disc to be produced. Each segment has an increased weight as compared to conventionally employed segments. The RPM of the needler is increased by a factor of 50% compared to conventional needling RPM while maintaining the needling strokes per minute and bowl RPM at a ratio of 350:1. The needles, which have barbed ends, push through the PAN fiber segments and bind each subsequent layer by punching, pushing, or pulling loose fibers through each layer during the downstroke and upstroke. The first layer is needled to the foam ring. Additional needling of layers continues until the desired weight and thickness is achieved (density). The preform is then carbonized at a pressure of two atmospheres and a temperature of 1600°C. The carbonized preform is subsequently die-cut.

At this point, the carbonized preform is subjected to Vacuum Pitch Infiltration, employing a low cost isotropic coal tar pitch, at a pressure of 100 psi. The pitch-infiltrated preform is then carbonized (charred) at a temperature of 810°C, and subsequently heat-treated at a temperature of 1600°C. The resulting strengthened, heat-treated disc is then subjected to Resin Transfer Molding with a synthetic naphthalene isotropic pitch (AR pitch from Mitsubishi Gas Chemical Co.) at a pressure of 900 to 1600 psi. At this point, oxidative stabilization is carried out at a temperature of 175°C to advance the pitch and prevent its exudation during carbonization. The stabilized RTM-pitch-infiltrated disc is carbonized at a temperature of 810°C, and then heat-treated at a temperature of 1600°C. Finally, the brake disc preform is subjected to a single cycle of CVD/CVI densification, followed by final machining and treatment with anti-oxidant solution, to prepare the desired carbon-carbon composite brake disc.

A significant benefit of the overall foregoing manufacturing procedure is the reduced cycle time which it provides (about 35%) along with the reduction in capital requirements obtained through increased throughput and lower investment in costly CVD/CVI furnaces. This approach - using high areal weight fabric segments - provides benefits such as reduced cycle time and reduced capital requirements due to speedier processing throughput. There is an additional capital savings due to the need for fewer needlers.

### EXAMPLE 2

Pre-cut segments of high areal weight oxidized polyacrylonitrile (O-PAN) fiber nonwoven fabric are layered on a foam ring in a needler. The segments are pre-cut based upon the size of the brake disc to be produced. The number of high areal weight fabric segments used to make the perform is reduced. The RPM of the needler is increased by a is needled to the foam ring. Additional needling of layers continues until a targeted weight and thickness is achieved.

The preform is then carbonized at a temperature of 1600°C at atmospheric pressure, and subsequently die-cut. The carbonized volume fraction is maintained at a low level due to the absence of pressure applied during carbonization. Then the carbonized preform is subjected to CVD/CVI processing. The CVD/CVI-gas-infiltrated preform is then carbonized (charred) at a temperature of 810°C, and subsequently heat-treated at a temperature of 1600°C. The resulting strengthened, heat-treated disc is then subjected to Resin Transfer Molding with a synthetic naphthalene isotropic pitch (AR pitch from Mitsubishi Gas Chemical Co.) at a pressure of 900 to 1600 psi. At this point, oxidative stabilization is carried out at a temperature of 170°C to advance the pitch and prevent its exudation during carbonization. The stabilized RTM-pitch-infiltrated disc is carbonized at a temperature of 810°C, and then heat-treated at a temperature of 1600°C. At this point, the brake disc preform is subjected to a single final cycle of CVD/CVI densification, followed by final machining and treatment with anti-oxidant solution, to prepare the desired carbon-carbon composite brake disc.

A significant benefit of the overall foregoing manufacturing procedure is the reduced cycle time which it provides (about 46-48%) along with the reduction in capital requirements obtained through increased throughput and lower utilization of costly CVD/CVI furnace time. Additional benefits of this process are: reduction in materials cost compared to the baseline; capital savings due to the need for fewer needlers; reduced number of CVD/CVI cycles to achiever a given final density; and improved final density of the carbon-carbon composite through replacement of some of the low density PAN fiber with high density CVD/CVI.

### EXAMPLE 3

Pre-cut segments of high areal weight oxidized polyacrylonitrile (O-PAN) fiber nonwoven fabric are layered on a foam ring in a needler. The high areal weight segments are pre-cut based upon the size of the brake disc to be produced. The RPM of the needler is increased by a factor of 50% compared to conventional needling RPM while maintaining the needling strokes per minute and bowl RPM at a ratio of 350:1. The needles, which have barbed ends, push through the PAN fiber segments and bind each subsequent layer by punching, pushing, or pulling loose fibers through each layer during the downstroke and upstroke. The first layer is needled to the foam ring. Additional needling of layers continues until the desired weight and thickness is reached for the preform.

The preform is then carbonized at a temperature of 1600°C and a pressure of two atmospheres, and subsequently die-cut. Then the carbonized preform is subjected to Vacuum Pitch Infiltration, employing a low cost isotropic coal tar pitch, at a pressure of 100 psi. The pitch-infiltrated preform is then carbonized (charred) at a temperature of 810°C, and subsequently heat-treated at a temperature of 1600°C. The foregoing steps (VPI with isotropic coal tar pitch at 100 psi, followed by carbonization at 810°C, followed by heat-treatment at 1600°C) are repeated twice. VPI pressures may be elevated to 150 psi in the first repetition and to 200 in the second repetition. After a total of 3 VPI pitch densifications, the density of the preform reaches 1.55 g/cc. At this point, the brake disc preform is subjected to a single final cycle of CVD/CVI densification, followed by final machining and treatment with anti-oxidant solution, to prepare the desired carbon-carbon composite brake disc.

A significant benefit of the overall foregoing manufacturing procedure is the reduced cycle time which it provides (about 35%) along with the reduction in capital requirements obtained through increased throughput. There are capital savings due to the need for fewer needlers; reduced number of CVD/CVI cycles to achiever a given final density; and improved final density of the carbon-carbon composite through replacement of some of the low density PAN fiber with high density CVD/ CVI.

In addition to the above advantages, the density of the final carbon-carbon composite friction products produced by the present invention are typically greater than 1.75 g/cc. This compares favorably with the density of 1.7 g/cc which is typical for all-CVD/CVI-densified carbon-carbon composites. In addition, the density of the composites produced by the present invention is uniform through the thickness of the disc, so that stable friction and wear performance is provided throughout the life of the brake.

### Industrial Applicability

Densification of the preform with multiple cycles of isotropic pitch (e.g. coal tar pitch) in place of one or more CVD/CVI cycles provides a low cost method of manufacturing a carbon-carbon composite for friction and wear applications. The pitch densification step could be carried out in VPI and/or RTM modes, with coal tar, petroleum, or synthetic pitches that are isotropic or mesophase. In terms of manufacturing economics, the hybrid composite concept embodied in the present invention enables the use of low cost pitch materials combined with low cost capitalization to produce carbon friction materials with consistent properties and friction and wear performance.

The present invention has been described herein in terms of preferred embodiments thereof. Additions and modifications to the disclosed method of manufacturing carbon-carbon composites will become apparent to those skilled in the relevant arts upon consideration of the foregoing disclosure. It is intended that all such obvious modifications and additions form a part of the present invention to the extent that they fall within the scope of the following claims.

## Claims

1. A method of making a carbon-carbon composite brake disc or brake pad which comprises the sequential steps of:
(i) providing segments of fabric comprised of polyacrylonitrile, pitch, or rayon carbon fiber precursors, which fabric may be pre- or post-carbonized, wherein said fabric segment is produced from a fabric which has a high basis weight, said high basis weight being in the range from 1350 grams per square meter to 3000 grams per square meter;
(ii) providing a needler capable of needling layers of said high basis weight fibrous fabric segments to one another;
(iii) needling a plurality of layers of said fibrous fabric segments to one another, thereby combining the fibrous fabric segments into a brake disc or brake pad preform;
(iv) carbonizing the fibrous preform at 1200-2540°C to convert the carbon fiber precursors in the high areal weight fabric preform into carbon fibers, thereby producing a carbon fiber brake disc or brake pad preform;
(v) densifying the resulting carbonized needled fibrous high areal weight fabric preform with pitch, which may be isotropic or anisotropic, or with such pitch and CVD/CVI;
(vi) carbonizing the resulting pitch-infiltrated, high areal weight fabric-derived, carbon fiber brake disc or brake pad to carbonize the pitch therein;
(vii) heat-treating the resulting pitch-densified carbon brake disc or brake pad at 1200-2540°C;
(viii) subjecting said carbon brake disc or brake pad to a final cycle of CVD/CVI processing in order to produce a carbon-carbon composite brake disc or brake pad which has a uniform through-thickness density of at least 1.60 grams per cubic centimeter; and
(ix) optionally, subjecting said carbon brake disc or brake pad to a final heat treatment at 1200-2540°C,
wherein the preform composed of needled high basis weight fabric segment layers reaches a thickness suitable for manufacturing a brake disc or pad therefrom after a needling time which is 80% or less the needling time necessary to produce a preform having the same thickness from an otherwise similar fibrous nonwoven fabric segment having a conventional basis weight of 1000 grams per square meter subjected to identical processing conditions, and
whereby said method provides cost reductions, with respect to otherwise similar manufacturing methods in which the brake disc or brake pad preform made from fabric segments having conventional basis weight and in which no pitch densification step is employed, said benefits being derived from: faster preforming rates; reduced number of densification steps to meet final density targets; reduced capital investment in costly CVD/CVI furnaces; and reduced overall manufacturing cycle times.

2. The method of claim 1, wherein said high basis weight fibrous nonwoven fabric segment has a basis weight of 1500 g/m² and is an arc of 68° with an outside radius of 12 inches and an inside radius of 6 inches, an annulus of 360° with an outside radius of 12 inches and an inside radius of 6 inches, or a square 28 inches on a side.

3. The method of claim 1, wherein the brake disc or brake pad preform produced is 1 to 4 inches in thickness, and wherein the brake disc or brake pad preform manufactured therefrom is 0.5 to 1.75 inches in thickness.

4. The method of claim 1, wherein the target density of the preform produced in step (iii) is in the range of 0.35 to 0.55 g/cc.

5. The method of claim 1, wherein a target density of the brake disc or brake pad produced in step (viii) or in step (ix) is in the range 1.6 to 1.9 g/cc.

6. The method of claim 1, wherein the carbonization of the fibrous fabric preform is conducted with no constraint, thereby producing a carbon-carbon composite brake disc or pad with lower volume fraction in the final composite and having a density of 1.6-1.9 grams per cubic centimeter.

7. The method of claim 1, wherein the RPM of the needler bowl is run at an RPM higher than the conventional manufacturing RPM of 2 RPM.

8. The method of claim 1, wherein the needler runs at a stroke speed greater than 700 strokes per minute to combine the fibrous fabric layers into a fibrous preform.

9. The method of claim 1, which includes an optional oxidative stabilization step prior to carbonization to prevent exudation from the preform during carbonization.

10. The method of claim 1, which includes an optional machining step after carbonization to open porosity at the surface(s) of the carbon disc prior to further densification.

11. The method of claim 1, wherein in step (iii), a plurality of layers of said fibrous fabric segments are needled to one another, thereby combining the fibrous fabric segment layers into a brake disc or pad preform, by a needler selected from the group consisting of annular rotating needlers, annular non-rotating needlers, or non annular needlers.

12. The method of claim 1, wherein step (v) includes densifying the resulting carbonized needled fibrous fabric preform with isotropic pitch or anisotropic pitch or with such pitch and CVD/CVI, to substitute higher density carbon from the pitch and/or CVD/CVI processing for lower density fiber in corresponding brake discs or brake pads having conventional fiber volume fractions, wherein the fibrous preform is densified by pitch via vacuum pressure infiltration (VPI) or resin transfer molding (RTM) processing.

13. The method of claim 1, wherein step (viii) comprising subjecting said carbon brake disc or brake pad to a final cycle of CVD/CVI processing in order to produce a carbon-carbon composite brake disc or pad which has a density of 1.60 to 1.90 g/cc or greater and which has a uniform through-thickness density.
